# EUROPÄISCHE PATENTANMELDUNG

(11) **EP 1 643 160 A2**
(43) Veröffentlichungstag der Anmeldung: **05.04.2006**
(21) Anmeldenummer: 05020636.6
(22) Anmeldetag: 22.09.2005
(51) Int. Cl.: F16H 57/02

(54) **Montage einer Getriebewelle und Verfahren dafür**

(30) Priorität: 30.09.2004 DE 102004047534
(71) Anmelder: GM Global Technology Operations, Inc., Detroit, MI 48265-3000 (US)
(72) Erfinder: Kirchner, Eckhard, Prof., 55291 Saulheim (DE)
(74) Vertreter: Strauss, Peter

(57) **Zusammenfassung**

Die Erfindung betrifft ein Zahnradgetriebe (1) mit einem Gehäuse (2), mindestens einer Getriebewelle (3), die durch eine mindestens ein Wälzlager (4,5) umfassende Lagereinheit (4,5) gelagert ist, das einen Außenring (6), einen Innenring (7) sowie zwischen dem Außenring (6) und dem Innenring (7) Wälzkörper (8) umfasst.

Erfindungsgemäß ist vorgesehen, dass das Wälzlager (8) im Wesentlichen als alleiniges Bauteil innerhalb des Zahnradgetriebes (1) geeignet ist während der Montage die Getriebewelle (3) axial zu positionieren und/oder vorzuspannen.

## Beschreibung

Die Erfindung betrifft ein Zahnradgetriebe mit einem Gehäuse, mit mindestens einer Getriebewelle, die durch eine Lagereinheit gelagert ist und mindestens ein Wälzlager umfasst, das einen Außenring, einen Innenring sowie zwischen dem Außenring und dem Innenring Wälzkörper umfasst. Des Weiteren bezieht sich die Erfindung auf ein Verfahren zur zuverlässigen Positionierung der Getriebewelle eines Zahnradgetriebes.

Zur Lagerung von Wellen in einem Getriebe oder Motor ist beispielsweise die Verwendung von Kegelrollenlagern üblich. Diese werden paarweise montiert und benötigen eine axiale Vorspannung. Das Gehäuse des Getriebes ist in der Regel senkrecht zur Wellenachse geteilt, wobei in jedem Gehäuseteil ein Lagersitz der zu lagernden Welle vorgesehen ist. Werden die beiden Teile des Gehäuses bei der Montage zusammengefügt und gegeneinander verschraubt, so werden die Kegelrollenlager dabei mit der erforderlichen axialen Vorspannung beaufschlagt.

Um die axiale Positionierung sowie die Größe der Vorspannung genau einzustellen, ist es bekannt vor Montage des Gehäuses Justierscheiben zwischen Gehäuse und Kegelrollenlager einzulegen. Dazu muss die Länge der Welle und die Tiefe der Gehäuseteile gemessen werden, um die erforderliche Dicke der Justierscheiben bestimmen zu können. Diese Einstellung der Lager ist außerordentlich aufwendig und störanfällig. Bei falscher Einstellung kann es zu Lager- und Getriebeschäden kommen. Ferner gestaltet es sich als aufwendig, sehr dünne Justierscheiben mittels der greifenden Roboterarme während des Montageprozesses zu verwenden.

In der DE 100 57 587 A1 ist eine Radlagerung mit einer mittels eines inneren und eines äußeren Wälzlagers drehbar auf einem Achsschenkel gelagerten Nabe beschrieben, wobei sich die Wälzkörper des Wälzlagers zwischen einer mit der Nabe umlaufenden äußeren Lagerlauffläche und einer inneren Lagerlauffläche abwälzen, die an einem auf dem Achsschenkel aufsitzenden Lagerinnenring ausgebildet ist. Um die mit den Kegelrollenlagern versehenen Nabe in axialer Richtung definiert auf dem Achsschenkel zu positionieren, ist an dem Achsschenkel eine Ringschulter angeformt, die eine radiale verlaufende, ringförmige Anschlagfläche für den Innenring des inneren Kegelrollenlagers bildet. Die Positionierung und Halterung der mit den beiden Kegelrollenlagern versehenen Nabe auf dem Achsschenkel wird durch eine Achsmutter bewirkt, die auf dem Außengewindeabschnitt des Achsschenkels aufgeschraubt ist. Auch diese Positionierung und Halterung der Nabe weist die oben beschriebenen Nachteile auf.

Die Aufgabe der vorliegenden Erfindung ist, ein Zahnradgetriebe zu schaffen, dass die oben genannten Nachteile vermeidet, insbesondere ein Zahnradgetriebe derart auszubilden, mit dem eine präzise und einfache Einstellung der axialen Position der Getriebewelle sowie der Vorspannung der Getriebewelle möglich ist.

Zur Lösung dieser Aufgabe wird ein Zahnradgetriebe mit den Merkmalen des Anspruchs 1 vorgeschlagen. In den abhängigen Ansprüchen sind bevorzugte Weiterbildungen ausgeführt.

Dazu ist erfindungsgemäß vorgesehen, dass das Wälzlager als alleiniges Bauteil innerhalb des Zahnradgetriebes geeignet ist, während der Montage die Getriebewelle axial zu positionieren und/oder vorzuspannen. Durch die vorliegende Erfindung wird eine Reduzierung der Justierscheibe (Distanzscheibe) erzielt, wodurch der Montageprozess des Zahnradgetriebes wesentlich verringert werden kann. Dem Werker und/oder dem Roboterarm des Montageprozesses steht das geeignete Wälzlager mit der entsprechenden Breite zur Verfügung, mit der die axiale Positionierung und/oder Vorspannung der Getriebewelle bewirkt werden kann. Der Hintergrund der Forderung nach einer axialen exakten Positionierung der Getriebewelle ist, eine wesentliche Reduktion der komfortbeeinträchtigen Schwingungen auf den Schalthebel zu erzielen. Durch beispielsweise produktionsbedingte Toleranzen und Verformungen der betroffenen Bauteile im Zahnradgetriebe, wie beispielsweise erstes und zweites Gangrad, Schaltmuffe, Muffenträger etc. kann es bei einem eingelegten dritten oder vierten Gang zu einem Taumeln der Schaltmuffe kommen. Dieses Taumeln überträgt Schwingungen über die Schaltgabel in Richtung Schaltwelle, von dort aus die Schwingungen sich bis zum Handschalthebel übertragen und nachteiligerweise dort vom Kunden als Komfortbeeinträchtigung wahrgenommen werden. Somit ist es notwendig, den Übertragungsweg der Schwingungen aufzutrennen. Einer der Möglichkeiten ist es, dass die Schaltmuffe im eingelegten Gang nicht an das erste oder zweite Gangrad angelegt ist, sondern dass die Schaltgabel mit ihrem Fuß mittig in der Nut der Schaltmuffe steht. Diese berührungsfreie Positionierung der Schaltgabel relativ zur Schiebemuffe erfordert eine exakte axiale Positionierung der Getriebewelle, welche durch das erfindungsgemäße Wälzlager erzielt werden kann.

Zweckmäßigerweise weist das Wälzlager zumindest eine in Axialrichtung der Getriebewelle ausgerichtete Anlagefläche auf, die unmittelbar an der Gehäusewand anliegt. Hierbei ist es wahlweise möglich, dass der Außenring oder der Innenring des Wälzlagers mit seiner Anlagefläche am Gehäuse anliegt. Das Material des Innen- und des Außenringes besteht vorzugsweise aus einem gehärtetem Stahl oder einem Einsatzstahl.

In einer weiteren Ausführungsform der Erfindung kann das Wälzlager als ein trennbares oder ein nicht-trennbares Lager ausgebildet sein, das in der Lage ist, wenigstens in einer axialen Richtung Druckkräfte aufzunehmen. Bei dem Wälzlager kann es sich hierbei um ein Kegelrollenlager oder um ein Rillenkugellager handeln. Weitere Wälzlagertypen sind selbstverständlich hinsichtlich der Erfindung ebenfalls einsetzbar. Gemäß der Erfindung steht dem Montageprozess jeweils ein Wälzlager zur Verfügung, welches hinsichtlich seiner Breite unterschiedliche Stufungen aufweist. Von einem bestimmten Nennmaß der Wälzlagerbreite kann das Wälzlager eine unterschiedliche Anzahl an Stufen aufweisen, wodurch in axialer Richtung die passende Wälzlagerbreite am Innenring und/oder am Außenring zur axialen exakten Einstellung der Getriebewelle gewählt werden kann.

Die einzelnen Breitenstufen können beispielsweise 0,1 mm betragen. Handelt es sich beispielsweise um ein trennbares Wälzlager wird zunächst der Innenring des Wälzlagers auf die Getriebewelle aufgebracht und anschließend erfolgt eine Messung des Zahnradgetriebes, die unter anderem Auskunft über die axiale Position der Getriebewelle gibt. Anhand der Daten kann die exakte Breite des Außenrings ermittelt werden, die für dieses Zahnradgetriebe notwendig ist. Der Werker oder der Montageroboter wählt aus seinem Magazin den dort entsprechenden Außenring mit der für das Zahnradgetriebe notwendigen abgestuften Breite aus und setzt ihn in den geeigneten Lagersitz auf die Getriebewelle ein. Selbstverständlich ist es ebenfalls möglich, einen entsprechend der abgemessenen Geometrie des Zahnradgetriebes angepassten, gestuften Innenring auf die Getriebewelle aufzusetzen.

In einer weiteren Ausführungsform der Erfindung ist die Getriebewelle durch das Wälzlager mit einer Kraft bis zu 10KN vorgespannt. Das erfindungsgemäße gestufte Wälzlager ist als alleiniges Bauteil somit in der Lage die nötige Vorspannkraft auf die Getriebewelle auszuüben.

Zur Lösung der Aufgabe wird des Weiteren ein Verfahren mit den Merkmalen des Anspruches 12 vorgeschlagen. In den abhängigen Ansprüchen sind bevorzugte Weiterbildungen ausgeführt.

Dazu ist erfindungsgemäß vorgesehen, dass zur Positionierung der Getriebewelle des Zahnradgetriebes zunächst die Getriebewelle und das Gehäuse vermessen werden. Anhand der ermittelten Geometriedaten wird die axiale Position des einzubauenden Wälzlagers bestimmt. In Abhängigkeit von der notwendigen Vorspannkraft, die die Getriebewelle innerhalb des Gehäuses aufweisen soll, sowie der Geometriedaten wird die entsprechende Wälzlagerbreite bestimmt. Anschließend wird das Wälzlager mit der entsprechenden Breite an der Getriebewelle und/oder am Gehäuse befestigt. In einer Ausführungsform kann der Innenring des Wälzlagers auf die Getriebewelle gepresst werden. Der Außenring wird an die Anlagefläche innerhalb des Gehäuses angeordnet. Anschließend wird die Getriebewelle in das Gehäuse geführt.

Die notwendige Breite des Wälzlagers kann beispielsweise durch eine Auswerteeinheit erfolgen. Die Auswerteeinheit weist vorzugsweise einen Mikrokontroller auf, der mit einem Speicher, vorzugsweise einem Siliziumspeicher verbunden ist, der ein sehr geringes Gewicht, ein sehr kleines Bauvolumen aufweist, sowie nur sehr geringe Mengen an Strom benötigt.

Das erfindungsgemäße Verfahren kann in einem Programm aufgezeichnet sein, dass in einem computerlesbaren Aufzeichnungsmedium gespeichert ist. Das Programm wird hierbei vorzugsweise auf einem magnetischen Aufzeichnungsmedium wie einer Floppy Disk aufgezeichnet oder auf einem optischen Aufzeichnungsmedium wie einer CD-ROM, einer CR-R (Compact Disk Recordable), einem Blitzspeicher (Flash Memory) oder dergleichen. Durch den Einsatz des Aufzeichnungsmediums mit hierauf aufgezeichnetem Programm lässt sich das Programm bei einer Vielzahl von Auswerteeinheiten durch das Aufzeichnungsmedium installieren, wodurch die Anwendbarkeit des Verfahrens verbessert wird. Ferner ist es ebenfalls denkbar, dass das Programm in einem Computernetzwerk installiert ist und ein Host-Computer in dem Computernetzwerk die tatsächliche Auswertung durchführt.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigt:

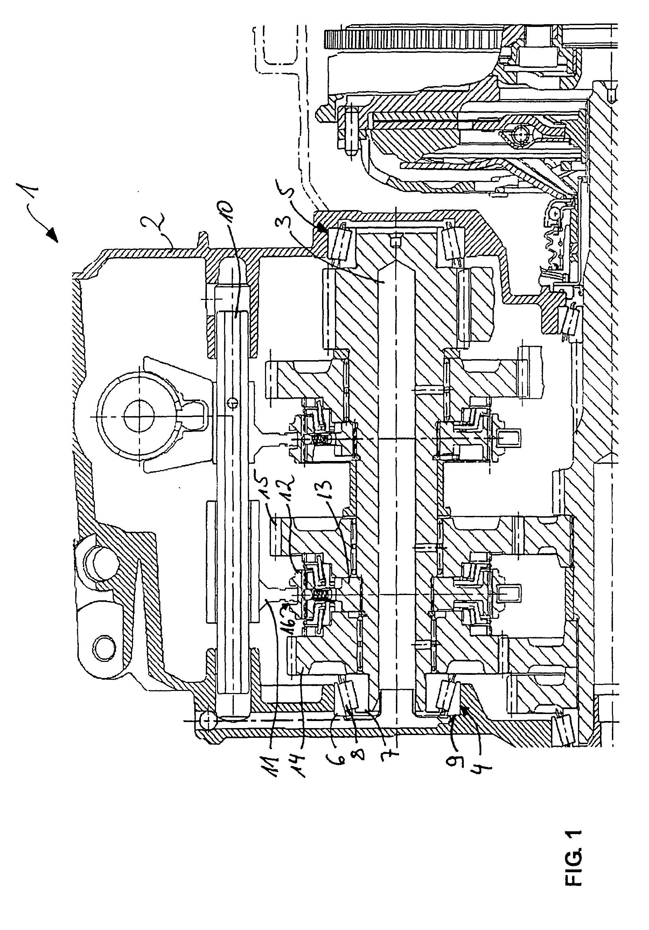

Fig. 1 ein Ausschnitt eines erfindungsgemäßen Zahnradgetriebes mit einem Gehäuse, einer Getriebewelle, die durch eine Lagereinheit insbesondere Wälzlager gelagert ist;
Fig.1 zeigt einen Ausschnitt eines erfindungsgemäßen Zahnradgetriebes 1 eines Kraftfahrzeuges, in dem eine Getriebewelle 3 angeordnet ist. Die Getriebewelle 3 wird durch zwei Wälzlager 4, 5 an beiden Seiten gelagert. Hierbei befindet sich an der linken Seite die getriebeseitige Lagerung, an der rechten Seite die kupplungsseitige Lagerung. Des Weiteren ist an der Getriebewelle 3 das erste Gangrad 14 und das zweite Gangrad 15 angeordnet. Zwischen beiden Gangrädern 14,15 befindet sich ein Gleichlaufkörper 13 (Muffenträger), der mittels einer Welle-Nabe-Verzahnung drehfest mit der Getriebewelle 3 verbunden ist. Oberhalb des Muffenträgers 13 zwischen dem ersten 14 und dem zweiten Gangrad 15 ist eine Schaltvorrichtung angeordnet. Die Schaltvorrichtung weist eine Schaltmuffe 12 auf, die auf dem Gleichlaufkörper 13 längsverschiebbar gelagert ist und in eine Verzahnung eines Gangrades 14, 15 in Wirkverbindung bringbar ist. Die Schaltmuffe 12 weist eine Nut 16 auf, in der eine Schaltgabel 11 mit ihrem Schaltgabelfuß aufgenommen ist. Die Schaltmuffe 12 ist hierbei parallel zur Getriebewelle 3 verschiebbar angeordnet. Die Schaltgabel 11 ist an einer Schaltwelle 10 angeordnet, die im Getriebegehäuse 2 in einem Gleitlager gelagert und achsparallel zur Getriebewelle 3 angeordnet ist. Die Schaltwelle 10 lässt sich in der vorliegenden Ausführungsform mittels eines nicht dargestellten Verstellteils oder Aktuators bewegen. Anstelle eines Aktuators kann auch eine unmittelbare oder mittelbare manuelle Schaltbewegeinleitung für die Schaltgabel 11 vorgenommen werden.

Wenn eine Schaltfunktion ausgelöst wird, bewegt der Aktuator die in Fig.1 dargestellte Schaltgabel 11 um einen maximal möglichen Schaltweg. Dabei drückt die Schaltgabel 11 mit ihrem Schaltgabelfuß die Schaltmuffe 12 entweder in Richtung des ersten Gangrades 14 oder des zweiten Gangrades 15. Damit etwaig entstehende Schwingungen auf den Schalthebel innerhalb des Fahrzeuges nicht übertragen werden, ist es notwendig, dass der Schaltgabelfuß 11 relativ zur Schiebemuffe 12 in berührungsfreier Position sich befindet. Dieses wird beispielsweise durch eine exakte Positionierung der Getriebewelle 3 erreicht. Im Gegensatz zu den im Stand der Technik verwendeten Distanzscheiben, die zwischen der Gehäusewand 2 und dem getriebeseitigen Wälzlager 4 positioniert werden, ist das erfindungsgemäße Wälzlager 4 in der Lage als alleiniges Bauteil innerhalb des Zahnradgetriebes 1 die Getriebewelle 3 sowohl axial zu positionieren als auch vorzuspannen.

Wie Fig.1 verdeutlicht, liegt der Außenring 6 des getriebeseitigen Wälzlagers 4 direkt an der Gehäusewandung 2 an. Bei dem Wälzlager 4 handelt es sich um ein Lager, welches hinsichtlich seines Breitennennmaßes unterschiedliche Dickenstufen bezüglich des Außenringes 6 aufweist. Nachdem im Montagevorgang in einer der letzten Montagestufen der Innenring 7 des Wälzlagers 4 auf die Getriebewelle 3 aufgebracht worden ist, erfolgt eine Einzelmessung in der Montagelinie des Zahnradgetriebes 1, in der die notwendige, einzustellende axiale Position der Getriebewelle 3 ermittelt wird. Aufgrund dieser ermittelten Messwerte kann der geeignete Außenring 6 des Wälzlagers 4 mit seiner entsprechenden gestuften Breite (Dicke) gewählt werden und vom Roboterarm in die entsprechende Lagerposition eingebracht werden. Anschließend wird der Gehäusedeckel 2 aufgebracht, wobei der Außenring 6 unmittelbar am Gehäusedeckel 2 anliegt. Der Außenring 6 ist in der vorliegenden Ausführungsform der Erfindung derart ausgewählt worden, dass er sowohl die Getriebewelle 3 in die korrekte axiale Position bringt als auch auf die Getriebewelle 3 die notwenige Vorspannkraft für einen zuverlässigen Betrieb der Getriebewelle 3 bzw. des Zahnradgetriebes 1 bewirkt. Die auf die Getriebewelle 3 wirkende Vorspannkraft kann bis zu 10KN betragen.

Da im Montagevorgang bei der vorliegenden Ausführungsform der Erfindung eine axiale Positionierung und/oder Vorspannung erst erfolgt, wenn die getriebeseitige Lagerung 4 auf die Getriebewelle 3 aufgebracht wird, ist es bei der kupplungsseitigen Lagerung 5 nicht notwendig ein in seiner Breite gestuftes Wälzlager (wie auf der Getriebeseite) zu verwenden.

Wie in Fig.1 deutlich zu erkennen ist, liegt das Wälzlager 4 mit einer in Axialrichtung der Getriebewelle 3 ausgerichteten Anlagefläche 9 direkt an der Gehäusewandung 2 an. In einer alternativen Ausführungsform der Erfindung (die nicht dargestellt ist) ist es selbstverständlich möglich, dass der Innenring 7 des Wälzlagers 4 als Positionier- und/oder Vorspannelement verwendet wird. In diesem Fall liegt der Innenring unmittelbar an der Gehäusewand 2 oder an einem anderen festen Bauteil des Zahnradgetriebes 1 an, wobei das entsprechend gestufte Breitenmaß des Innenringes 7 eingesetzt wird, um eine Getriebewelleneinstellung optimal zu bewirken.

Bei der in Fig.1 dargestellten Getriebewellenlagerung handelt es sich um eine X-Lagerung. Selbstverständlich ist die vorliegende Erfindung auch auf eine O-Lagerung anwendbar. Das Wälzlager 4 ist in der dargestellten Ausführungsform des Zahnradgetriebes 1 als Kegelrollenlager ausgebildet. In einer weiteren nicht dargestellten Getriebeeinheit ist die Erfindung ebenfalls auch auf ein Rillenkugellager anwendbar. Des Weiteren können die Wälzlager als trennbare und nicht trennbare Lager ausgebildet sein.

### Bezugszeichenliste

- 1: Zahnradgetriebe
- 2: Gehäuse
- 3: Getriebewelle
- 4: Wälzlager
- 5: Wälzlager
- 6: Außenring
- 7: Innenring
- 8: Wälzkörper
- 9: Anlagefläche
- 10: Schaltwelle
- 11: Schaltgabel
- 12: Schaltmuffe
- 13: Gleichlaufkörper
- 14: erstes Gangrad
- 15: zweites Gangrad
- 16: Nut

## Patentansprüche

1. Zahnradgetriebe (1) mit einem Gehäuse (2), mindestens einer Getriebewelle (3), die durch eine mindestens ein Wälzlager (4,5) umfassende Lagereinheit (4,5) gelagert ist, das einen Außenring (6), einen Innenring (7) sowie zwischen dem Außenring (6) und dem Innenring (7) Wälzkörper (8) umfasst, **dadurch gekennzeichnet, dass** das Wälzlager (8) im Wesentlichen als alleiniges Bauteil innerhalb des Zahnradgetriebes (1) geeignet ist während der Montage die Getriebewelle (3) axial zu positionieren und/oder vorzuspannen.

2. Zahnradgetriebe (1) nach Anspruch 1, **dadurch gekennzeichnet, dass** das Wälzlager (4,5) zumindest eine in Axialrichtung der Getriebewelle (3) ausgerichtete Anlagefläche (9) aufweist, die unmittelbar an der Gehäusewand (2) anliegt.

3. Zahnradgetriebe (1) nach Anspruch 1 oder 2, **dadurch gekennzeichnet, dass** der Außenring (6) und/oder der Innenring (7) mit der Anlagefläche (9) ausgebildet sind.

4. Zahnradgetriebe (1) nach einem der genannten Ansprüche, **dadurch gekennzeichnet, dass** das Wälzlager (4,5) als ein trennbares oder ein nicht-trennbares Lager ausgebildet ist.

5. Zahnradgetriebe (1) nach einem der genannten Ansprüche, **dadurch gekennzeichnet, dass** das Wälzlager (4,5) ein Kegelrollenlager oder ein Rillenkugellager ist.

6. Zahnradgetriebe (1) nach einem der genannten Ansprüche, **gekennzeichnet durch** eine Schaltvorrichtung, die eine Schaltwelle (10), eine Schaltgabel (11), die an einer Seite mit dem Schaltgabelfuß in Wirkverbindung mit einer Schaltmuffe (12) steht, die auf einem Gleichlaufkörper (13) längsverschiebbar gelagert ist und mindestens in eine Verzahnung eines Gangrades (14,15) in Wirkverbindung bringbar ist.

7. Zahnradgetriebe (1) nach Anspruch 6, **dadurch gekennzeichnet, dass** der Gleichlaufkörper (13) drehfest mit der Getriebewelle (3) verbunden ist.

8. Zahnradgetriebe (1) nach Anspruch 6 oder 7, **dadurch gekennzeichnet, dass** der Schaltgabelfuß (11) in einer Nut (16) der Schaltmuffe (12) aufgenommen ist.

9. Zahnradgetriebe (1) nach einem der genannten Ansprüche, **dadurch gekennzeichnet, dass** die Schaltmuffe (12) achsparallel und/oder koaxial zur Getriebewelle (3) verschiebbar ist.

10. Zahnradgetriebe (1) nach einem der genannten Ansprüche, **dadurch gekennzeichnet, dass** die Getriebewelle (3) durch das Wälzlager (4,5) mit einer Kraft bis zu 10KN vorgespannt ist.

11. Wälzlager (4,5) für ein Zahnradgetriebe (1) nach einem der genannten Ansprüche, **dadurch gekennzeichnet, dass** das Wälzlager (4,5) im wesentlichen als alleiniges Bauteil geeignet ist die Getriebewelle (3) innerhalb des Zahnradgetriebes (1) axial zu positionieren und/oder vorzuspannen.

12. Verfahren zur Positionierung einer Getriebewelle (3) eines Zahnradgetriebes (1) nach einem der genannten Ansprüche, **gekennzeichnet durch** folgende Schritt :
a. Vermessung der Getriebewelle (3) und des Gehäuses (2),
b. Ermittlung der notwendigen Wälzlagerbreite,
c. Befestigung des Wälzlagers an der Getriebewelle und/oder innerhalb des Gehäuses,
d. Einführen der Getriebewelle in das Gehäuse.

13. Verfahren nach Anspruch 12, **dadurch gekennzeichnet, dass** eine Auswerteeinheit die notwendige Getriebebreite berechnet.

14. Computerprogramm-Produkt zur Ausführung des Verfahrens nach einem der genannten Ansprüche, **dadurch gekennzeichnet, dass** das Verfahren in einem in dem Computerprogramm-Produkt gespeicherten Programm integriert ist.

15. Kraftfahrzeug umfassend ein Zahnradgetriebe (1) nach einem der genannten Ansprüche.
